# EUROPEAN PATENT APPLICATION

(11) **EP 3 957 515 A2**
(43) Date of publication of application: **23.02.2022**
(21) Application number: 21191083.1
(22) Date of filing: 12.08.2021
(51) Int. Cl.: B60L 58/30, H01M 8/04313

(54) **POWER SUPPLY CONTROL SYSTEM, POWER SUPPLY CONTROL METHOD, AND PROGRAM**

(30) Priority: 18.08.2020 JP 2020138164
(71) Applicant: HONDA MOTOR CO., LTD., Minato-ku Tokyo 107-8556 (JP)
(72) Inventor: MORI, Takanori, 107-8556, Minato-ku, Tokyo (JP); TARUYA, Kenji, Wako-shi, 351-0193 (JP); IGARASHI, Daishi, Wako-shi, 351-0193 (JP); SATO, Shuhei, 107-8556, Minato-ku, Tokyo (JP); UENO, Satoshi, 107-8556, Minato-ku, Tokyo (JP); SHIMIZU, Kenichi, 107-8556, Minato-ku, Tokyo (JP)
(74) Representative: Weickmann & Weickmann PartmbB

(57) **Abstract**

According to an embodiment, a power supply control system includes a plurality of fuel cell systems mounted in an electric device that operates using electric power, a first controller configured to control the plurality of fuel cell systems in an integrated way, and a second controller configured to control the fuel cell system to which the second controller belongs among the plurality of fuel cell systems. The second controller acquires a state of the fuel cell system to which the second controller belongs and notifies the first controller of the state of the fuel cell system. The first controller controls power generation of each of the plurality of fuel cell systems on the basis of the state of the fuel cell system to which the second controller belongs acquired by the second controller.

## Description

### BACKGROUND

### Field of the Invention

The present invention relates to a power supply control system, a power supply control method, and a program.

Conventionally, technology for controlling power generation of a fuel cell system on the basis of required electric power calculated on the basis of an amount of accelerator depression, a temperature of a secondary battery, and a stored amount of electric power is known as technology related to a fuel cell system mounted in a vehicle (for example, Japanese Unexamined Patent Application, First Publication No. 2016-103460).

### SUMMARY

However, power supply control when a plurality of fuel cell systems are mounted in an electric device that operates using electric power has not been taken into account. Therefore, it may not be possible to appropriately combine power supplies from the plurality of fuel cell systems.

Aspects of the present invention have been made in consideration of such circumstances and an objective of the present invention is to provide a power supply control system, a power supply control method, and a program capable of supplying electric power by more appropriately combining a plurality of fuel cell systems.

A power supply control system, a power supply control method, and a program according to the present invention adopt the following configurations.
(1): According to an aspect of the present invention, there is provided a power supply control system including: a plurality of fuel cell systems mounted in an electric device that operates using electric power; a first controller configured to control the plurality of fuel cell systems in an integrated way; and a second controller configured to control the fuel cell system to which the second controller belongs among the plurality of fuel cell systems, wherein the second controller acquires a state of the fuel cell system to which the second controller belongs and notifies the first controller of the state of the fuel cell system, and wherein the first controller controls power generation of each of the plurality of fuel cell systems on the basis of the state of the fuel cell system to which the second controller belongs acquired by the second controller.
(2): In the above-described aspect (1), the first controller controls the plurality of fuel cell systems so that a difference in a state of each of the plurality of fuel cell systems becomes small.
(3): In the above-described aspect (1), the first controller determines at least one of the number of fuel cell systems to be allowed to generate the electric power and an amount of electric power to be generated by each fuel cell system so that a required amount of electric power is satisfied on the basis of the required amount of electric power from the electric device and one or both of a deterioration degree and power generation efficiency of each of the plurality of fuel cell systems acquired by the second controller.
(4): In the above-described aspect (3), the first controller acquires a deterioration degree in each of the plurality of fuel cell systems on the basis of at least one of a total power generation time period of each of the plurality of fuel cell systems, a power generation time period for each power generation state, the number of activations, and the number of stops.
(5): In the above-described aspect (4), the first controller causes one or more fuel cell systems among the plurality of fuel cell systems to generate the electric power so that a difference in at least one of deterioration degrees, total power generation time periods, the number of activations, or the number of stops of the plurality of fuel cell systems becomes small on the basis of the required amount of electric power from the electric device.
(6): In the above-described aspect (3), the first controller causes the fuel cell system having a lower deterioration degree or the fuel cell system having slower progress of deterioration based on the deterioration degree among the plurality of fuel cell systems to generate the electric power preferentially.
(7): In the above-described aspect (1), the electric device includes a plurality of pieces of auxiliary equipment, and, when an abnormality has been detected in at least some of the plurality of pieces of auxiliary equipment, the first controller causes power generation of the fuel cell system associated with the auxiliary equipment in which the abnormality has been detected among the plurality of fuel cell systems to be stopped.
(8): In the above-described aspect (7), when associations between the auxiliary equipment and the fuel cell systems are classified into a plurality of layers or groups in accordance with the number of fuel cell systems affected by the abnormality in the auxiliary equipment, the first controller acquires a plurality of fuel cell systems other than the fuel cell system that is stopped due to the detection of the abnormality in the auxiliary equipment on the basis of the layer or the group, and determines the fuel cell system to be allowed to generate the electric power preferentially on the basis of one or both of a deterioration degree and power generation efficiency of each of the plurality of fuel cell systems that have been acquired.
(9): In any one of the above-described aspects (1) to (8), the electric device is a mobile object.
(10): According to another aspect of the present invention, there is provided a power supply control method including: executing, by a computer, first control for controlling a plurality of fuel cell systems mounted in an electric device that operates using electric power in an integrated way; and executing, by the computer, second control for controlling the fuel cell system to which the second control belongs among the plurality of fuel cell systems, wherein the second control includes acquiring a state of the fuel cell system to which the second control belongs, and wherein the first control includes controlling power generation of each of the plurality of fuel cell systems on the basis of the state of the fuel cell system to which the second control belongs acquired by the second control.
(11): According to still another aspect of the present invention, there is provided a program causing a computer to: execute first control for controlling a plurality of fuel cell systems mounted in an electric device that operates using electric power in an integrated way; and execute second control for controlling the fuel cell system to which the second control belongs among the plurality of fuel cell systems, wherein the second control includes acquiring a state of the fuel cell system to which the second control belongs, and wherein the first control includes controlling power generation of each of the plurality of fuel cell systems on the basis of the state of the fuel cell system to which the second control belongs acquired by the second control.

According to the above-described aspects (1) to (11), it is possible to supply electric power by more appropriately combining a plurality of fuel cell systems.

### BRIEF DESCRIPTION OF THE DRAWINGS

FIG. 1 is a diagram showing an example of a configuration of an electric vehicle equipped with a power supply control system according to an embodiment.
FIG. 2 is a diagram showing an example of a configuration of a fuel cell (FC) system according to the embodiment.
FIG. 3 is a diagram showing an example of a configuration of a control device.
FIG. 4 is a diagram showing an example of a configuration of a supervisory ECU.
FIG. 5 is a diagram for describing content of state information.
FIG. 6 is a diagram for describing content of deterioration information.
FIG. 7 is a diagram showing a relationship between the number of FC systems and power generation efficiency.
FIG. 8 is a diagram for describing that the number of FC systems and an amount of electric power to be generated by each FC system are determined on the basis of required electric power.
FIG. 9 is a diagram for describing that the priority of the FC system allowed to generate electric power changes on the basis of a progress state of deterioration.
FIG. 10 is a diagram for describing content of auxiliary equipment information.
FIG. 11 is a flowchart showing an example of a flow of a process executed by a computer of the power supply control system according to the embodiment.

### DESCRIPTION OF EMBODIMENTS

Hereinafter, embodiments of a power supply control system, a power supply control method, and a program of the present invention will be described with reference to the drawings. The power supply control system according to the embodiment is mounted in, for example, an electric device that operates using electric power. The electric device includes, for example, a mobile object such as an electric vehicle, a railroad vehicle, a flying object (for example, an aircraft, a drone, or the like), a ship, and a robot. The electric device may include a stationary or portable device (for example, a fuel cell system). Hereinafter, an example in which the power supply control system is mounted in an electric vehicle will be described. The electric vehicle is, for example, a fuel cell vehicle using electric power generated in a fuel cell as electric power for traveling or electric power for operating an in-vehicle device. Electric vehicles are automobiles such as two-wheeled vehicles, three-wheeled vehicles, and four-wheeled vehicles. The electric vehicle may be, for example, a large vehicle such as a bus or a truck that can be equipped with a plurality of fuel cell systems to be described below.

### [Electric vehicle]

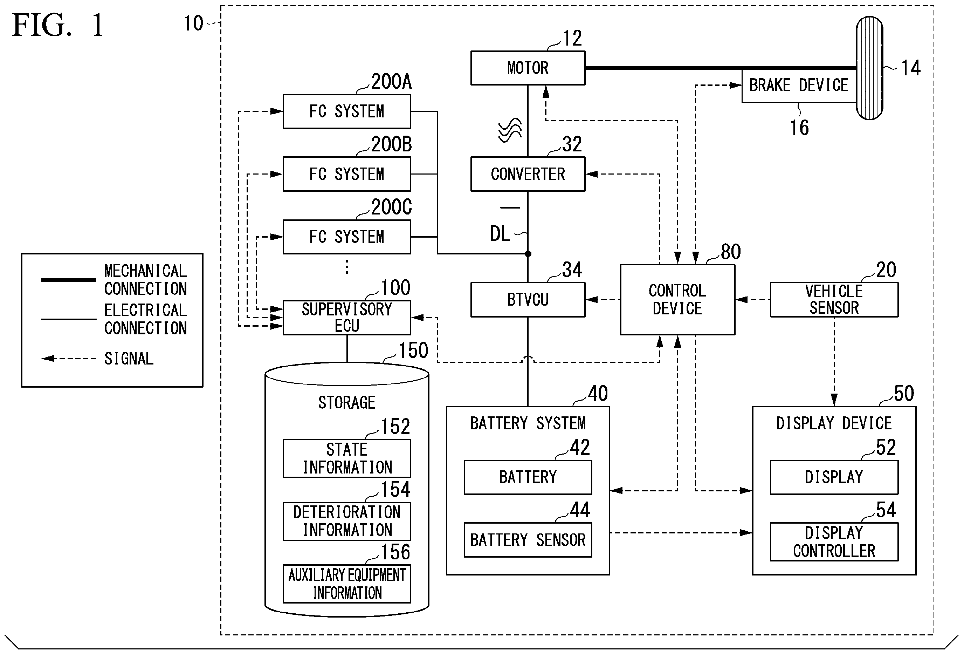

FIG. 1 is a diagram showing an example of a configuration of an electric vehicle equipped with the power supply control system according to the embodiment. As shown in FIG. 1, an electric vehicle 10 includes, for example, a motor 12, a drive wheel 14, a brake device 16, a vehicle sensor 20, a converter 32, a battery voltage control unit (BTVCU) 34, and a battery system (an example of a power storage device) 40, a display device 50, a control device 80, a supervisory electronic control unit (ECU) 100, a storage 150, and one or more fuel cell (FC) systems 200. Although a plurality of FC systems 200A, 200B, 200C, and the like are shown in the example of FIG. 1, they may be simply referred to as "FC systems 200" when they are not individually distinguished. The control device 80 is an example of a "higher-order device." For example, the higher-order device may be an in-vehicle device other than the control device 80 or may be an external device capable of communicating with the electric vehicle 10. A combination of the FC system 200 and the supervisory ECU 100 is an example of a "power supply control system." The power supply control system may be a combination of the above-described components and the control device 80. The supervisory ECU 100 is an example of a "first controller." The FC system 200 is an example of a "fuel cell system."

The motor 12 is, for example, a three-phase alternating current (AC) electric motor. The rotor of the motor 12 is connected to the drive wheel 14. The motor 12 outputs a driving force used for traveling of the electric vehicle 10 to the drive wheel 14 using at least one of electric power generated by the FC system 200 and electric power stored by the battery system 40. The motor 12 uses kinetic energy of the vehicle to generate electric power when the vehicle decelerates.

The brake device 16 includes, for example, a brake caliper, a cylinder configured to transfer hydraulic pressure to the brake caliper, and an electric motor configured to generate hydraulic pressure in the cylinder. The brake device 16 may include a mechanism configured to transfer the hydraulic pressure generated by the operation of the brake pedal to the cylinder via a master cylinder as a backup. The brake device 16 may be an electronically controlled hydraulic brake device configured to transfer the hydraulic pressure of the master cylinder to the cylinder.

The vehicle sensor 20 includes, for example, an accelerator opening degree sensor, a vehicle speed sensor, a brake depression amount sensor, and the like. The accelerator opening degree sensor is attached to an accelerator pedal which is an example of an operation element for receiving an acceleration instruction from a driver, detects an amount of operation of the accelerator pedal, and outputs the detected amount of operation as an accelerator opening degree to the control device 80. The vehicle speed sensor includes, for example, a wheel speed sensor attached to each wheel and a speed calculator and integrates wheel speeds detected by wheel speed sensors to derive the speed of the vehicle (a vehicle speed) and output the derived speed to the control device 80 and the display device 50. The brake depression amount sensor is attached to the brake pedal, detects an amount of operation of the brake pedal, and outputs the detected amount of operation as an amount of brake depression to the control device 80.

The vehicle sensor 20 may include an acceleration sensor configured to detect the acceleration of the electric vehicle 10, a yaw rate sensor configured to detect the angular speed around a vertical axis, a direction sensor configured to detect the direction of the electric vehicle 10, and the like. The vehicle sensor 20 may include a location sensor configured to detect a location of the electric vehicle 10. The location sensor acquires location information of the electric vehicle 10 from, for example, a global navigation satellite system (GNSS) receiver mounted in the electric vehicle 10 or a global positioning system (GPS) device. The vehicle sensor 20 may include a temperature sensor configured to measure a temperature of the FC system 200. Various types of information detected by the vehicle sensor 20 are output to the control device 80.

The converter 32 is, for example, an AC-direct current (DC) converter. A DC side terminal of the converter 32 is connected to a DC link DL. The battery system 40 is connected to the DC link DL via the BTVCU 34. The converter 32 converts an AC voltage obtained through power generation by the motor 12 into a DC voltage and outputs the DC voltage to the DC link DL.

The BTVCU 34 is, for example, a step-up DC-DC converter. The BTVCU 34 boosts the DC voltage supplied from the battery system 40 and outputs the boosted DC voltage to the DC link DL. The BTVCU 34 outputs a regenerative voltage supplied from the motor 12 or an FC voltage supplied from the FC system 200 to the battery system 40.

The battery system 40 includes, for example, a battery 42 and a battery sensor 44. The battery 42 is, for example, a secondary battery such as a lithium-ion battery. For example, the battery 42 stores the electric power generated by the motor 12 or the FC system 200 and is discharged for the traveling of the electric vehicle 10 or for the operation of the in-vehicle device.

The battery sensor 44 includes, for example, an electric current sensor, a voltage sensor, and a temperature sensor. The battery sensor 44 detects, for example, an electric current value, a voltage value, and a temperature of the battery 42. The battery sensor 44 outputs the electric current value, the voltage value, the temperature, and the like that have been detected to the control device 80.

The battery system 40 may be connected to, for example, an external charging facility to charge the battery 42 with the electric power supplied from a charging/discharging device.

The display device 50 includes, for example, a display 52 and a display controller 54. The display 52 is, for example, a display or a head-up display (HUD) provided within a meter or on an instrument panel. The display 52 displays various types of information according to control of the display controller 54. The display controller 54 causes the display 52 to display an image based on information output by the battery system 40, information output by the supervisory ECU 100, or information output by the FC system 200. The display controller 54 causes the display 52 to display an image based on information output by the vehicle sensor 20 or the control device 80. The display controller 54 causes the display 52 to display an image indicating the vehicle speed or the like output by the vehicle sensor 20. The display device 50 may include a speaker configured to output a sound and may output a sound, an alarm, or the like associated with an image displayed on the display 52.

The control device 80 controls the traveling of the electric vehicle 10, the operation of the in-vehicle device, and the like. For example, the control device 80 controls the supply of electric power with which the battery system 40 is charged, the electric power generated by the FC system 200, and the like in accordance with the electric power required from the electric vehicle 10. The required electric power from the electric vehicle 10 is, for example, total load power required for the load of the electric vehicle 10 to be driven or operated. The load includes, for example, auxiliary equipment such as the motor 12, the brake device 16, the vehicle sensor 20, the display device 50, and other in-vehicle devices. The auxiliary equipment may be auxiliary equipment for consuming electric power supplied from the FC system associated with the auxiliary equipment itself among the plurality of FC systems or may be a device (for example, a sensor or a controller) required to operate the FC system in addition to (or instead of) the auxiliary equipment. The control device 80 may perform control of the traveling of the electric vehicle 10 and the like. The details of the function of the control device 80 will be described below.

The supervisory ECU 100 controls a plurality of FC systems (FC systems 200A, 200B, 200C, and the like) in an integrated way. For example, the supervisory ECU 100 controls an amount of electric power to be supplied by combining amounts of electric power to be generated by the plurality of FC systems in an integrated way on the basis of control information (for example, operation instruction information) from the control device 80 or another higher-order device and the like. The supervisory ECU 100 includes a plurality of communication interfaces according to the number of FC systems and each communication interface communicates with the FC system of a connection destination. When an abnormality has been detected in the auxiliary equipment, the supervisory ECU 100 may perform control such as stopping the power generation of the FC system associated with the auxiliary equipment in which the abnormality has been detected. The details of the function of the supervisory ECU 100 will be described below.

The storage 150 is implemented by, for example, a hard disk drive (HDD), a flash memory, an electrically erasable programmable read only memory (EEPROM), a read only memory (ROM), a random access memory (RAM), or the like. For example, the storage 150 stores state information 152, deterioration information 154, auxiliary equipment information 156, a program, and various types of other information. The content of the state information 152, the deterioration information 154, and the auxiliary equipment information 156 will be described below.

For example, the FC system 200 includes a fuel cell. The fuel cell is, for example, a battery configured to generate electric power when fuel of an anode reacts with an oxidant of a cathode. For example, the fuel cell generates electric power when hydrogen contained as fuel in a fuel gas reacts with oxygen contained as an oxidant in air. The FC system 200 performs power generation of an amount of electric power to be generated indicated in an instruction according to control of the supervisory ECU 100 and outputs electric power, which has been generated, to, for example, a DC link DL between the converter 32 and the BTVCU 34 to supply the electric power. Thereby, the electric power supplied by the FC system 200 is supplied to the motor 12 via the converter 32 or to the battery system 40 via the BTVCU 34 according to the control of the control device 80 or the like or stored in the battery 42, or the electric power required for auxiliary equipment or the like associated with each FC system is supplied.

### [FC system]

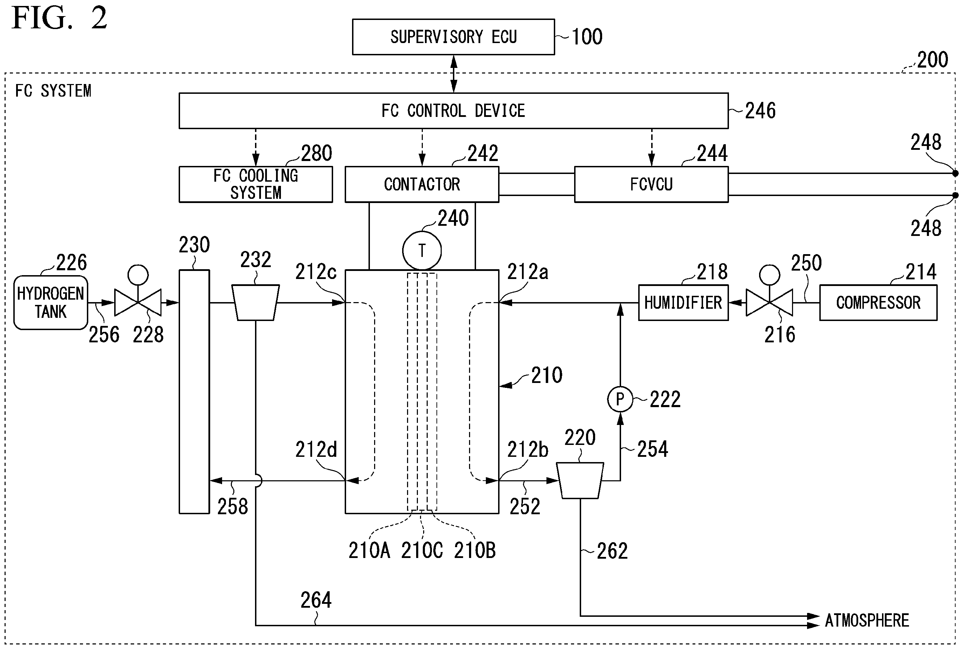

Next, the FC system 200 will be described specifically. FIG. 2 is a diagram showing an example of a configuration of the FC system 200 according to the embodiment. The configuration shown in FIG. 2 can be applied to each of a plurality of FC systems 200 mounted in the electric vehicle 10. The FC system 200 according to the present embodiment is not limited to the following configuration and may have, for example, any configuration as long as it is a system configuration in which electric power is generated using an anode and a cathode. The FC system 200 shown in FIG. 2 includes, for example, an FC stack 210, a compressor 214, a sealing inlet valve 216, a humidifier 218, a gas-liquid separator 220, an exhaust gas circulation pump (P) 222, a hydrogen tank 226, a hydrogen supply valve 228, a hydrogen circulator 230, a gas-liquid separator 232, a temperature sensor (T) 240, a contactor 242, a fuel cell voltage control unit (FCVCU) 244, an FC control device 246, and an FC cooling system 280. The FC control device 246 is an example of a "second controller."

The FC stack 210 includes a laminate (not shown) in which a plurality of fuel cells are laminated, and a pair of end plates (not shown) configured to sandwich the laminate from both sides in a lamination direction. The fuel cell includes a membrane electrode assembly (MEA) and a pair of separators configured to sandwich the membrane electrode assembly from both sides in a bonding direction. The membrane electrode assembly includes, for example, an anode 210A made of an anode catalyst and a gas diffusion layer, a cathode 210B made of a cathode catalyst and a gas diffusion layer, and a solid polymer electrolyte membrane 210C made of a cation-exchange membrane or the like sandwiched between the anode 210A and the cathode 210B from both sides in a thickness direction.

A fuel gas containing hydrogen as fuel is supplied from the hydrogen tank 226 to the anode 210A. Air, which is an oxidant gas (a reaction gas) containing oxygen as an oxidant, is supplied from the compressor 214 to the cathode 210B. The hydrogen supplied to the anode 210A is ionized by a catalytic reaction on an anode catalyst and hydrogen ions move to the cathode 210B via the solid polymer electrolyte membrane 210C that is appropriately humidified. Electrons generated by the movement of hydrogen ions can be taken out to an external circuit (the FCVCU 244 or the like) as a DC. The hydrogen ions that have moved from the anode 210A onto a cathode catalyst of the cathode 210B react with the oxygen supplied to the cathode 210B and the electrons on the cathode catalyst to generate water.

The compressor 214 includes a motor and the like that are driven and controlled by the FC control device 246 and pumps an oxidant gas to the fuel cell by taking in and compressing air from the outside using the driving force of the motor and feeding the compressed air to the oxidant gas supply path 250 connected to the cathode 210B.

The sealing inlet valve 216 is provided in the oxidant gas supply path 250, which connects the compressor 214 and a cathode supply port 212a capable of supplying air to the cathode 210B of the FC stack 210 and is opened and closed according to control of the FC control device 246.

The humidifier 218 humidifies the air fed from the compressor 214 to the oxidant gas supply path 250. For example, the humidifier 218 includes a water permeable membrane such as a hollow fiber membrane and adds moisture to the air by causing the air from the compressor 214 to be brought into contact with the moisture via the water permeable membrane.

The gas-liquid separator 220 causes a cathode exhaust gas, which is not consumed by the cathode 210B and is expelled from a cathode discharge port 212b to an oxidant gas discharge path 252, and the liquid water to be expelled into the atmosphere via the cathode exhaust path 262. The gas-liquid separator 220 may separate the cathode exhaust gas expelled to the oxidant gas discharge path 252 from the liquid water and only the separated cathode exhaust gas may be allowed to flow into an exhaust gas recirculation path 254.

The exhaust gas circulation pump 222 is provided in the exhaust gas recirculation path 254, mixes the cathode exhaust gas that has flowed from the gas-liquid separator 220 to the exhaust gas recirculation path 254 with the air flowing through the oxidant gas supply path 250 from the sealing inlet valve 216 to the cathode supply port 212a, and supplies a mix of the cathode exhaust gas and the air to the cathode 210B again.

The hydrogen tank 226 stores hydrogen in a compressed state. The hydrogen supply valve 228 is provided in a fuel gas supply path 256 that connects the hydrogen tank 226 and an anode supply port 212c capable of supplying hydrogen to the anode 210A of the FC stack 210. When the hydrogen supply valve 228 is opened according to the control of the FC control device 246, the hydrogen stored in the hydrogen tank 226 is supplied to the fuel gas supply path 256.

The hydrogen circulator 230 is, for example, a pump that circulates and supplies a fuel gas to the fuel cell. For example, the hydrogen circulator 230 causes the anode exhaust gas, which is not consumed by the anode 210A and is expelled from an anode discharge port 212d to a fuel gas discharge path 258, to circulate to the fuel gas supply path 256 flowing into the gas-liquid separator 232.

The gas-liquid separator 232 separates the anodic exhaust gas and the liquid water that circulate from the fuel gas discharge path 258 to the fuel gas supply path 256 according to the action of the hydrogen circulator 230. The gas-liquid separator 232 supplies the anode exhaust gas separated from the liquid water to the anode supply port 212c of the FC stack 210. The liquid water expelled to the gas-liquid separator 232 is expelled into the atmosphere via a drain pipe 264.

The temperature sensor 240 detects temperatures of the anode 210A and the cathode 210B of the FC stack 210 and outputs a detection signal (temperature information) to the FC control device 246.

The contactor 242 is provided between the anode 210A and the cathode 210B of the FC stack 210 and the FCVCU 244. The contactor 242 electrically connects or disconnects the FC stack 210 and the FCVCU 244 on the basis of the control from the FC control device 246.

The FCVCU 244 is, for example, a step-up DC-DC converter. The FCVCU 244 is disposed between the anode 210A and the cathode 210B of the FC stack 210 and an electrical load via the contactor 242. The FCVCU 244 boosts the voltage of an output terminal 248 connected to the electric load side to a target voltage determined by the FC control device 246. For example, the FCVCU 244 boosts the voltage output from the FC stack 210 to the target voltage and outputs the voltage to the output terminal 248.

The FC control device 246 controls the FC system to which the FC control device 246 belongs among the plurality of FC systems. For example, the FC control device 246 acquires a state of the FC system to which the FC control device 246 belongs continuously or according to an instruction from the supervisory ECU 100, and notifies the supervisory ECU 100 of acquired information. The state of the FC system to which the supervisory ECU 100 belongs includes, for example, a current power generation state (for example, information about whether or not electric power is being generated, an amount of electric power that has been generated, or the like), a power generation time period for each power generation state, a total power generation time period of the system, the number of activations (or the number of stops) or the like.

The FC control device 246 controls the start and end of power generation in the FC system 200, the amount of electric power to be generated, and the like according to the power generation control by the supervisory ECU 100. The FC control device 246 controls the temperature adjustment of the FC system 200 using the FC cooling system 280. The FC control device 246 may be replaced with a control device such as an FC-ECU. Also, the FC control device 246 may perform power supply control of the electric vehicle 10 in cooperation with the supervisory ECU 100 or the control device 80.

The FC cooling system 280 cools the FC system 200 according to the control by the FC control device 246, for example, when the temperature of the FC stack 210 detected by the temperature sensor 240 is greater than or equal to a threshold value. For example, the FC cooling system 280 decreases the temperature of the FC stack 210 by circulating a refrigerant to the flow path provided within the FC stack 210 and expelling the heat of the FC stack 210. The FC cooling system 280 may perform control for heating or cooling the FC stack 210 so that the temperature from the temperature sensor 240 is maintained in a predetermined temperature range when the FC system 200 is generating electric power.

### [Control device]

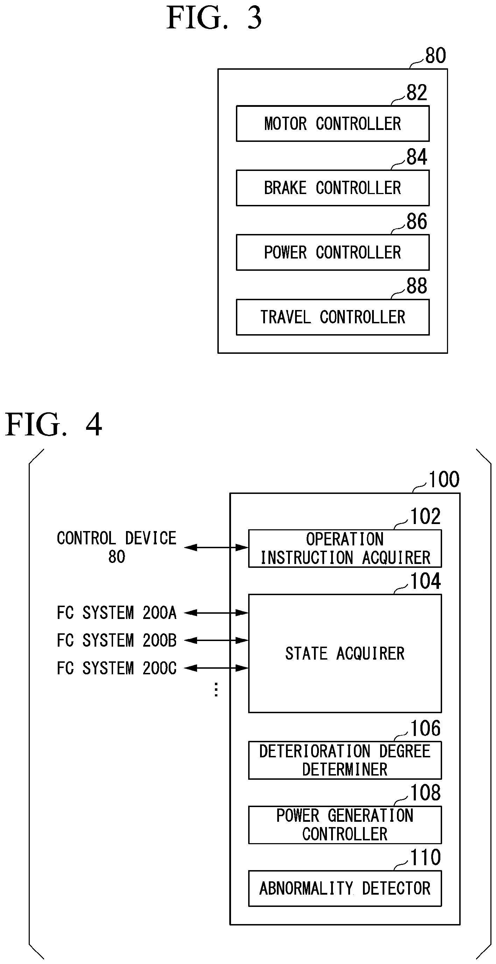

FIG. 3 is a diagram showing an example of a configuration of the control device 80. The control device 80 includes, for example, a motor controller 82, a brake controller 84, a power controller 86, and a travel controller 88. Each of the motor controller 82, the brake controller 84, the power controller 86, and the travel controller 88 is implemented, for example, by a hardware processor such as a central processing unit (CPU) executing a program (software). Some or all of these components may be implemented by hardware (a circuit including circuitry) such as a large-scale integration (LSI) circuit, an application specific integrated circuit (ASIC), a field-programmable gate array (FPGA), or a graphics processing unit (GPU) or may be implemented by software and hardware in cooperation. The program may be pre-stored in a storage device (a storage device including a non-transitory storage medium) such as an HDD or a flash memory of the electric vehicle 10 or may be stored in a removable storage medium such as a DVD or a CD-ROM and installed in the HDD or the flash memory of the electric vehicle 10 when the storage medium (the non-transitory storage medium) is mounted in a drive device. The storage device described above is, for example, the storage 150.

The motor controller 82 calculates a driving force required for the motor 12 on the basis of the output of the vehicle sensor 20 and controls the motor 12 so that the calculated driving force is output.

The brake controller 84 calculates a braking force required for the brake device 16 on the basis of the output of the vehicle sensor 20 and controls the brake device 16 so that the calculated braking force is output.

The power controller 86 calculates a required amount of electric power to be generated by the battery system 40 and the FC system 200 on the basis of the output of the vehicle sensor 20. For example, the power controller 86 calculates a torque to be output by the motor 12 on the basis of an accelerator opening degree and a vehicle speed and calculates the required amount of electric power by calculating a sum of the drive shaft load power obtained from the torque and the rotational speed of the motor 12 and the electric power required by the auxiliary equipment or the like. The power controller 86 adjusts an amount of electric power to be supplied from the battery system 40 or an amount of electric power to be generated by the FC system 200 so that electric power for satisfying the required amount of electric power is supplied to the auxiliary equipment or the like. The power controller 86 outputs an operation instruction for supplying the adjusted amount of electric power from the battery 42 or causing the plurality of FC systems to generate a predetermined amount of electric power to the supervisory ECU 100. The power controller 86 may manage a charging state (a storage state) of the battery system 40. In this case, the power controller 86 calculates a state of charge (SOC) (a charging rate) of the battery 42 on the basis of the output of the battery sensor 44. For example, when the SOC of the battery 42 is less than a predetermined value, the power controller 86 executes control for charging the battery 42 according to power generation by the FC system 200 or causes the display device 50 to output information for prompting the occupant to charge the battery 42 according to the supply of electric power from an external charging facility. The power controller 86 may stop the charging control when the SOC of the battery 42 is greater than the predetermined value or may perform control for causing the surplus power generated by the FC system 200 to be consumed by the auxiliary equipment or the like.

The travel controller 88 executes driving control for the electric vehicle 10 on the basis of information acquired by, for example, the vehicle sensor 20. The travel controller 88 may execute driving control of the electric vehicle 10 on the basis of map information or information acquired from a monitoring unit (not shown) in addition to the information acquired by the vehicle sensor 20. For example, the monitoring unit includes a camera for imaging a space outside the electric vehicle 10, a radar or a light detection and ranging (LIDAR) sensor having a detection range outside the electric vehicle 10, a physical object recognition device for performing a sensor fusion process on the basis of outputs thereof, and the like. The monitoring unit estimates types of physical objects (particularly, vehicles, pedestrians, and bicycles) present around the electric vehicle 10 and outputs the estimated types of physical objects together with information of positions and speeds thereof to the travel controller 88. For example, the driving control is to cause the electric vehicle 10 to travel by controlling one or both of steering and acceleration/deceleration of the electric vehicle 10. The driving control includes, for example, driving assistance control of an advanced driver assistance system (ADAS) or the like. The ADAS includes, for example, a lane keeping assistance system (LKAS), an adaptive cruise control system (ACC), a collision mitigation brake system (CMBS), and the like.

### [Supervisory ECU]

FIG. 4 is a diagram showing an example of a configuration of the supervisory ECU 100. The supervisory ECU 100 includes, for example, an operation instruction acquirer 102, a state acquirer 104, a deterioration degree determiner 106, a power generation controller 108, and an abnormality detector 110. Each of the operation instruction acquirer 102, the state acquirer 104, the deterioration degree determiner 106, the power generation controller 108, and the abnormality detector 110 is implemented, for example, by a hardware processor such as a CPU executing a program (software). Some or all of these components may be implemented by hardware (a circuit including circuitry) such as an LSI circuit, an ASIC, an FPGA, or a GPU or may be implemented by software and hardware in cooperation. The program may be pre-stored in a storage device (a storage device including a non-transitory storage medium) such as an HDD or a flash memory of the electric vehicle 10 or may be stored in a removable storage medium such as a DVD or a CD-ROM and installed in the HDD or the flash memory of the electric vehicle 10 when the storage medium (the non-transitory storage medium) is mounted in a drive device. The storage device described above is, for example, the storage 150. The operation instruction acquirer 102 is an example of a "first acquirer." The state acquirer 104 is an example of a "second acquirer."

The operation instruction acquirer 102 includes, for example, one communication interface that communicates with the control device 80. For example, the operation instruction acquirer 102 acquires the operation instructions of the plurality of FC systems 200 output from the control device 80 through the above communication interface. Specifically, the operation instruction acquirer 102 acquires a required amount of electric power to be generated by the plurality of FC systems 200 allowed by the control device 80 (for example, an amount of electric power obtained by subtracting an amount of electric power to be supplied by the battery system 40 from the required amount of electric power required for the entire electric vehicle) and an operation instruction for executing the power generation operation so that the required amount of electric power is satisfied. The operation instruction acquirer 102 may acquire an operation instruction from a higher-order device other than the control device 80.

The state acquirer 104 includes, for example, a plurality of communication interfaces according to the number of FC systems 200 mounted in the electric vehicle 10. The state acquirer 104 acquires the state of the FC system 200 associated with the communication interface from each of the plurality of communication interfaces at a predetermined timing or interval. The state of the FC system 200 includes, for example, information of the notification from the FC control device 246, more specifically, information of at least one of a total power generation time period, a power generation time period for each power generation state, and the number of activations (or the number of stops) of the FC system. The state of the FC system 200 may include a deterioration degree determined by the deterioration degree determiner 106. The state acquirer 104 stores the acquired state of each FC system in the state information 152 of the storage 150.

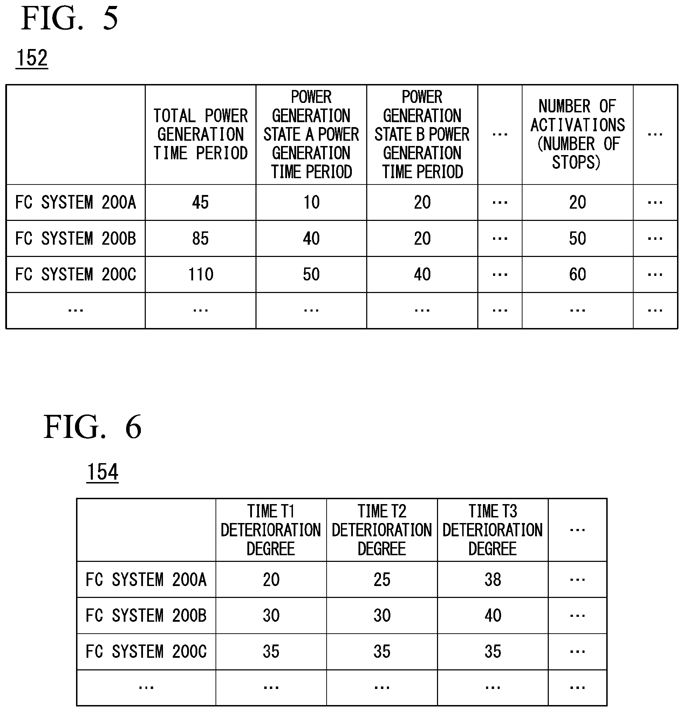

FIG. 5 is a diagram for describing content of the state information 152. For example, the state information 152 is information in which the total power generation time period, the power generation time period for each power generation state, and the number of activations (or the number of stops) are associated with each FC system mounted in the electric vehicle 10. The power generation states A, B, and the like indicate that temperatures, load regions, or the like of the FC systems are different from each other. For example, the load region is a region distinguished by, for example, the range of required electric power, a genre of load (for example, a traveling system, an in-vehicle device, or the like), the number of FC systems at the time of power generation, and the like.

The deterioration degree determiner 106 determines a deterioration degree for each of the plurality of FC systems on the basis of at least one of the total power generation time period of each of the plurality of FC systems, the power generation time period for each power generation state, the number of activations, and the number of stops. For example, the deterioration degree determiner 106 determines the deterioration degree of each FC system at a predetermined timing or interval and stores a determination result in the deterioration information 154 of the storage 150.

FIG. 6 is a diagram for describing content of the deterioration information 154. For example, the deterioration information 154 is information in which the deterioration degree at the determination time is associated with each FC system mounted in the electric vehicle 10. In the example of FIG. 6, it is assumed that the time progresses in the order of times T1, T2, and T3. In the example of FIG. 6, it is assumed that the deterioration degree increases as the numerical value increases. The deterioration degree may be an index value indicating the degree such as a letter (for example, A, B, C, or the like) instead of the numerical value.

For example, the deterioration degree determiner 106 increases the deterioration degree as the total power generation time period increases. A weight for increasing the deterioration degree may be changed in accordance with the power generation state during the power generation time period. In addition to (or instead of) the determination described above, the deterioration degree determiner 106 may increase the deterioration degree as the number of times the FC system 200 is activated or stopped increases. For example, the deterioration degree determiner 106 may preset a table in which the deterioration degree is associated with the total power generation time period and the number of activations (or the number of stops) and determine the deterioration degree associated with the total power generation time period and the number of activations using the table. The deterioration degree determiner 106 may preset a function or a learned model in which the total power generation time period or the number of activations (or the number of stops) is designated as an input value and the deterioration degree is designated as an output value and determine the deterioration degree using the function or the learned model.

The power generation controller 108 controls power generation by each of the plurality of FC systems so that the required amount of electric power is satisfied on the basis of an operation instruction acquired by the operation instruction acquirer 102. For example, the power generation controller 108 controls power generation by one or more FC systems among the plurality of FC systems on the basis of system efficiencies of the plurality of FC systems. The system efficiency is, for example, efficiency based on the lifespan of the entire FC system, efficiency based on power generation (or power supply) for each system, efficiency based on another preset index value, or the like.

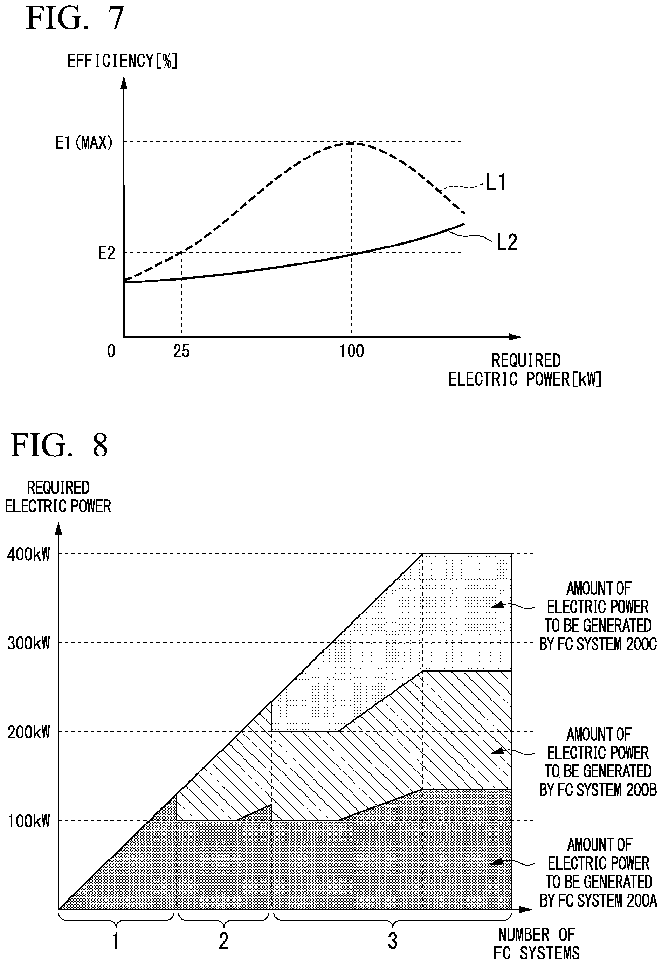

FIG. 7 is a diagram showing a relationship between the number of FC systems and power generation efficiency. In the example of FIG. 7, the vertical axis represents power generation efficiency [%] and the horizontal axis represents required electric power [kW]. Hereinafter, it is assumed that the FC system has the optimum efficiency when one FC system generates an electric power of 100 [kW] for a predetermined time period. The amount of electric power to be generated associated with optimum efficiency is arbitrarily set in accordance with, for example, a type, performance, or scale of the FC system. For example, when the required electric power is 100 [kW], the FC system 200A performs power generation at an efficiency of E1 [%] which is the optimum efficiency (efficiency MAX) as shown in a curve L1 of FIG. 7 if only one FC system (for example, the FC system 200A) is allowed to generate the electric power.

On the other hand, when a plurality of FC systems are used, the efficiency of each FC system becomes E2 [%], which is smaller than E1 as shown in a curve L2 of FIG. 7, and the system efficiency deteriorates in a case in which control is performed so that the sum of amounts of electric power to be generated is 100 [kW] if each FC system is allowed to simply generate electric power with an identical or similar amount of electric power to be generated. Thus, the power generation controller 108 determines the number of FC systems for generating electric power and an amount of electric power to be generated (an amount of supply to the load) on the basis of a state and a deterioration degree of each FC system and the like so that the plurality of FC systems have the optimum efficiency as a whole in accordance with the required electric power.

For example, the power generation controller 108 controls power generation of each of a plurality of FC systems so that the content of the operation instruction is satisfied and the difference between the states of the plurality of FC systems 200 becomes small. Specifically, for example, when the power generation controller 108 determines the FC system that controls power generation from the plurality of FC systems, the power generation controller 108 determines priority on the basis of the deterioration degree of each FC system, and performs control so that electric power is generated from the FC system with the highest priority that has been determined. In this case, the power generation controller 108 causes the FC system having a lowest deterioration degree among the plurality of FC systems to generate electric power preferentially with reference to the deterioration information 154 stored in the storage 150. Thereby, it is possible to generate an amount of electric power that satisfies the required electric power more efficiently and reduce a difference in the deterioration degree.

For example, the power generation controller 108 may cause a system having slower deterioration progress to generate electric power preferentially on the basis of a progress state of deterioration according to the elapse of time of each FC system with reference to the deterioration information 154 stored in the storage 150. For example, a progress state of deterioration (for example, a state in which the progress is faster or slower than that of another FC system or the like) is acquired from the transition of the deterioration degree for each point in time included in the deterioration information 154 and the FC system having the progress of the slowest deterioration as compared with other FC systems is allowed to generate electric power preferentially. Thereby, the progress of deterioration can be made uniform and the lifespan of the entire FC system can be extended. Extending the lifespan of the entire FC system is an example in which system efficiency is improved.

The power generation controller 108 may compare deterioration degrees of the plurality of FC systems and control the FC system to be allowed to generate electric power so that a difference in the deterioration degree becomes small. The power generation controller 108 may determine the FC system whose power generation is controlled on the basis of a comparison result (for example, a difference) associated with the deterioration degree of each of the plurality of FC systems.

Instead of the above-described control, the power generation controller 108 may control the FC system to be allowed to generate electric power so that at least one of a difference in the total power generation time period, a difference in the number of activations, and a difference in the number of stops of each of the plurality of FC systems becomes small. In this case, the power generation controller 108 causes the FC system having a shorter total power generation time period or the smaller number of activations or stops than the other FC systems to generate electric power preferentially with reference to the state information 152. Thereby, the lifespan of the entire FC system can be extended.

The power generation controller 108 may determine the number of FC systems to be allowed to generate electric power and an amount of electric power to be generated by each FC system on the basis of the required amount of electric power and one or both of the deterioration degree and the power generation efficiency of each of the plurality of FC systems acquired by the state acquirer 104.

FIG. 8 is a diagram for describing that the number of FC systems and the amount of electric power to be generated by each FC system are determined on the basis of the required electric power. In the example of FIG. 8, the vertical axis represents the required electric power and the horizontal axis represents the number of FC systems. In the example of FIG. 8, it is assumed that the electric vehicle 10 is equipped with three FC systems 200A, 200B, and 200C.

The power generation controller 108 controls the power generation of one or more FC systems among the plurality of FC systems 200A, 200B, and 200C mounted in the electric vehicle 10 on the basis of a magnitude of the required electric power. For example, the power generation controller 108 adjusts the amount of electric power to be generated by each FC system so that the FC system that is generating electric power can generate electric power in a state close to the optimum efficiency. Specifically, the power generation controller 108 controls the amount of electric power to be generated by the FC system so that the amount of electric power to be generated is close to 100 [kW] (optimum efficiency). Therefore, electric power is generated by one FC system when the required electric power acquired by the operation instruction acquirer 102 is less than 100 [kW], electric power is generated by two FC systems when the required electric power acquired by the operation instruction acquirer 102 is greater than or equal to 100 [kW] and less than 200 [kW], and electric power is generated by three FC systems when the required electric power acquired by the operation instruction acquirer 102 is greater than or equal to 200 [kW].

The power generation controller 108 may set an upper limit value of the required electric power associated with the optimum efficiency in accordance with the number of FC systems mounted in the electric vehicle 10. In the example of FIG. 8, 400 [kW] is set as the upper limit value of the required electric power. By setting the upper limit value of the amount of electric power to be generated, it is possible to limit the high-load power generation of the FC system and limit the system deterioration.

When the number of FC systems to be allowed to generate electric power is increased, the power generation controller 108 may cause electric power to be generated by an excessive amount of electric power obtained by adding a predetermined amount to the preset amount of electric power to be generated associated with the optimum efficiency (100 [kW]) with respect to the amount of electric power to be generated by the FC system which is generating electric power. An amount of electric power to be generated associated with the optimum efficiency is an example of an amount of electric power to be generated serving as a reference for increasing or decreasing the number of fuel cell systems. That is, the power generation controller 108 performs switching of the number of FC systems to be allowed to generate electric power so that more optimum efficiency is provided in the entire system on the basis of the deterioration of the efficiency of the FC system during power generation when the load is high and the increased improvement of the efficiency of the FC system when the load is low. Thereby, because it is possible to cause the increased amount of electric power to be generated by the FC system to be generated from a certain amount of electric power, it is possible to limit the deterioration of the efficiency of the increased power generation of the FC system.

When the number of FC systems to be allowed to generate electric power is increased according to a magnitude of the required electric power, the power generation controller 108 causes the amount of electric power to be generated by the FC system that has been generating electric power before the increase to be maintained in a state in which the amount of electric power to be generated by the FC system is close to the amount of electric power to be generated associated with the optimum efficiency (100 [kW]).

In the example of FIG. 8, the power generation controller 108 causes electric power to be generated using only the FC system 200A when the required electric power is less than 100 [kW], which is an amount of electric power associated with the optimum efficiency. The power generation by the FC system 200A is continued until the amount of electric power becomes a predetermined excessive amount of electric power or more when the required electric power is greater than or equal to 100 [kW] and the power generation by the FC system 200B in addition to that of the FC system 200A is performed when the required electric power becomes greater than or equal to the excessive amount of electric power. When the power generation by the FC system 200B has been started, the power generation controller 108 performs control so that the amount of electric power to be generated by the FC system 200A is close to the optimum efficiency of 100 [kW] and causes the amount of electric power to be generated by the FC system 200B to be increased. Thereby, the power generation efficiency of the FC system 200A can be continued in an optimum state and the control load can be limited as compared with a case in which the two FC systems 200A and 200B are allowed to generate the same amount of electric power away from the optimum efficiency. Deterioration due to a large change in the amount of electric power generated by the FC system 200A can also be limited. The predetermined excessive amount of electric power may be set to, for example, a minimum amount of electric power capable of being stably generated by the FC system 200B. Thereby, a change in the output of the FC system between before and after the FC system 200B is activated can be limited.

When the required electric power is greater than or equal to 200 [kW], the power generation controller 108 does not immediately activate the FC system 200C and causes an amount of electric power of each of the FC system 200A and the FC system 200B to be increased from an amount of electric power associated with the optimum efficiency until a total amount of electric power to be generated by the FC system 200A and the FC system 200B reaches a predetermined excessive amount of electric power. Subsequently, power generation by the FC system 200C is started. When the power generation by the FC system 200C is started, the power generation controller 108 performs control so that the amounts of electric power to be generated by the FC systems 200A and 200B are close to 100 [kW] and causes the amount of electric power to be generated by only the FC system 200C to be increased. When the required electric power exceeds 300 [kW], the amount of electric power to be generated by each of the FC systems 200A to 200C is increased to the upper limit value 400 [kW] of the required electric power.

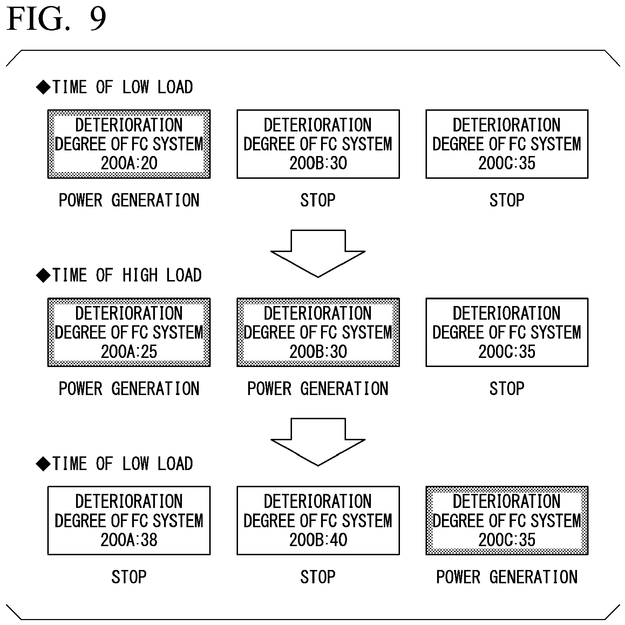

The power generation controller 108 may determine a power generation system which is allowed to generate electric power on the basis of a progress state of deterioration in each FC system. FIG. 9 is a diagram for describing that the priority of the FC system allowed to generate electric power changes on the basis of the progress state of deterioration. In the example of FIG. 9, a relationship between the deterioration degrees of the plurality of FC systems 200A to 200C at times T1, T2, and T3 and power generation control is shown.

For example, in the scene of time T1, when the required electric power of a low load (for example, a load of less than 100 [kW]) has been acquired by the operation instruction acquirer 102, the power generation controller 108 determines one FC system having the lowest deterioration degree among the FC systems 200A to 200C at the current point in time as an FC system of a power generation target with reference to the deterioration information 154. In the example of FIG. 9, at the point in time which is time T1, the deterioration degree of the FC system 200A is "20," the deterioration degree of the FC system 200B is "30," and the deterioration degree of the FC system 200C is "35." Therefore, the power generation controller 108 determines the FC system 200A among the FC systems 200A to 200C as an FC system allowed to generate electric power and causes the determined FC system 200A to generate electric power so that the amount of electric power to be generated by the FC system 200A is greater than or equal to the required amount of electric power.

For example, in the scene of time T2, when the required electric power of a high load (for example, a load of 100 [kW] or more and less than 200 [kW]) has been acquired by the operation instruction acquirer 102, the power generation controller 108 determines two FC systems from the FC system having the lowest deterioration degree at the current point in time among the FC systems 200A to 200C with reference to the deterioration information 154. In the example of FIG. 9, at a point in time which is time T2, the deterioration degree of the FC system 200A is "25," the deterioration degree of the FC system 200B is "30," and the deterioration degree of the FC system 200C is "35." Therefore, the power generation controller 108 determines the FC systems 200A and 200B among the FC systems 200A to 200C as FC systems to be allowed to generate electric power and performs power generation control so that a total value of amounts of electric power to be generated by the FC systems 200A and 200B is greater than or equal to the required amount of electric power. At the point in time which is time T2, the power generation control of the FC system 200B is added in addition to the FC system 200A whose power generation is already in progress. Therefore, the power generation controller 108 performs control so that the amount of electric power to be generated by the FC system 200A is close to the optimum power generation efficiency and performs control so that the FC system 200B is allowed to generate a differential amount of electric power between the amount of electric power to be generated and the required amount of electric power.

For example, in the scene of time T3, when the required electric power of a low load (for example, a load of less than 100 [kW]) has been acquired by the operation instruction acquirer 102, the power generation controller 108 determines one FC system having the lowest deterioration degree among the FC systems 200A to 200C at the current point in time with reference to the deterioration information 154. In the example of FIG. 9, at the point in time which is time T3, the deterioration degree of the FC system 200A is "38," the deterioration degree of the FC system 200B is "40," and the deterioration degree of the FC system 200C is "35." Therefore, the power generation controller 108 determines the FC system 200C among the FC systems 200A to 200C as an FC system to be allowed to generate electric power, and causes the determined FC system 200C to generate electric power so that the amount of electric power to be generated by the FC system 200C is greater than or equal to the required amount of electric power.

As described above, by operating the FC system in accordance with the required amount of electric power, it is possible to improve fuel efficiency and improve overall system efficiency. By performing control so that a deterioration progress degree is uniform, the overall system lifespan can be extended and the system efficiency (power supply efficiency) can be improved.

In addition to (or instead of) the above-described power generation control, when the operation instruction acquirer 102 has acquired information about the auxiliary equipment to which electric power is supplied from the control device 80, the power generation controller 108 may cause the FC system associated with the auxiliary equipment that has been acquired to generate electric power preferentially with reference to the auxiliary equipment information 156 stored in the storage 150.

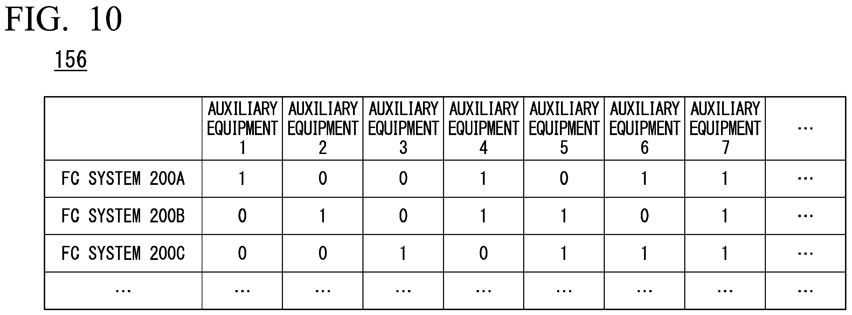

FIG. 10 is a diagram for describing content of the auxiliary equipment information 156. The auxiliary equipment information 156 is, for example, information associated with which of a plurality of pieces of auxiliary equipment (for example, auxiliary equipment 1 to 7) provided in the electric vehicle 10 for each FC system mounted in the electric vehicle 10 the electric power can be supplied to. Although "1" is stored for the auxiliary equipment to which electric power can be supplied for each FC system among a plurality of pieces of auxiliary equipment 1 to 7 and "0" is stored for the auxiliary equipment to which electric power cannot be supplied in the example of FIG. 10, other identification information may be stored. For example, the power generation controller 108 supplies electric power generated by the FC system 200A to the auxiliary equipment 1 when the electric power is supplied to the auxiliary equipment 1 (in the case of a power request from the auxiliary equipment 1) and supplies electric power generated by one or both of the FC system 200A and the FC system 200B to the auxiliary equipment 4 when the electric power is supplied to the auxiliary equipment 4. When electric power is supplied to the auxiliary equipment 7, the power generation controller 108 supplies the electric power generated by one or more FC systems among the FC systems 200A to 200C to the auxiliary equipment 7. Whether or not to allow a plurality of FC systems to generate electric power may be determined on the basis of the required amount of electric power as described above or may be determined on the basis of the state (for example, the deterioration degree) of the FC system or the like. The auxiliary equipment information 156 may be managed by classifying the FC systems associated with each piece of auxiliary equipment into a plurality of layers or groups in accordance with the number of FC systems affected by the abnormality in the auxiliary equipment. Thereby, it is possible to manage the number or scale of FC systems that are allowed to generate electric power in accordance with the amount of electric power required for auxiliary equipment. Therefore, a plurality of FC systems can be more appropriately combined to supply electric power to the auxiliary equipment.

The power generation controller 108 may cause the power generation by the FC system associated with the auxiliary equipment to be stopped when the abnormality detector 110 has detected an abnormality in at least some of pieces of auxiliary equipment. For example, "stopping the power generation" may include excluding an FC system from the power generation target when the FC system allowed to generate electric power is determined in accordance with the required amount of electric power from now and ending a power generation operation when the FC system is already generating electric power. In the example of FIG. 10, when the abnormality detector 110 detects that there is an abnormality in the auxiliary equipment 1, the power generation controller 108 causes the power generation by the FC system 200A to be stopped. Thereby, it is possible to limit the supply of electric power to the auxiliary equipment 1 having an abnormality. Because the FC system 200A is likely to have an abnormality when the auxiliary equipment 1 is a sensor of the FC system 200A or the like, it is possible to control the FC system more appropriately by stopping the FC system 200A.

The power generation controller 108 may cause the power generation of the FC system associated with auxiliary equipment in which no abnormality has been detected to be continued when no abnormality has been detected in other auxiliary equipment even if an abnormality has been detected in some pieces of auxiliary equipment. When associations between the auxiliary equipment and the FC systems are classified into a plurality of layers or groups in accordance with the number of FC systems affected by the abnormality in the auxiliary equipment, the power generation controller 108 may acquire a plurality of FC systems other than the FC system that is stopped due to the detection of the abnormality in the auxiliary equipment on the basis of the layer or the group, determine the FC system to be allowed to generate the electric power preferentially on the basis of one or both of a deterioration degree and power generation efficiency of each of the plurality of FC systems that have been acquired, and cause the power generation by the determined FC system to be continued.

In the example of FIG. 10, when electric power is supplied to the auxiliary equipment 4 in a state in which an abnormality has been detected in the auxiliary equipment 1, the power generation controller 108 causes the FC system 200B to generate electric power because the FC system 200A is stopped and supplies the electric power to the auxiliary equipment 4. When electric power is supplied to the auxiliary equipment 7 in a state in which an abnormality has been detected in the auxiliary equipment 1, the power generation controller 108 causes the power generation to be continued on the basis of one or both of the deterioration degree and the power generation efficiency of the remaining FC system 200B or 200C because the FC system 200A is stopped and supplies the electric power to the auxiliary equipment 7. In this way, by managing the auxiliary equipment information 156, it is possible to execute safer system control (evacuation control) when an abnormality has been detected in at least some of pieces of auxiliary equipment and the operation of the electric device can be continued without stopping all FC systems as far as possible. Also, by classifying the FC systems into a plurality of layers or groups in accordance with the number of FC systems affected by the abnormality in the auxiliary equipment and managing the FC systems, it is possible to determine the FC system to be allowed to continue power generation appropriately and improve the continuity of power generation.

When the abnormality detector 110 has detected an abnormality degree (an abnormality rank), a location where the abnormality has been detected, the number of abnormalities that have been detected, and the like, the power generation controller 108 may determine an FC system to be stopped or an FC system whose operation is to be continued in accordance with the abnormality rank, the abnormality location, and the number of abnormalities that have been detected.

The abnormality detector 110 detects an abnormality in the auxiliary equipment provided in the electric vehicle 10. For example, the abnormality detector 110 determines whether or not the auxiliary equipment is operating normally at a predetermined timing or interval and detects that there is an abnormality in the auxiliary equipment when it is determined that the auxiliary equipment is not operating normally. For example, when the auxiliary equipment is a type of sensor, the abnormality detector 110 determines that there is an abnormality in the type of sensor when a value detected by the type of sensor is outside of a preset predetermined range or when no value has been detected for a predetermined time period or longer. When an abnormality signal has been detected from the auxiliary equipment, the abnormality detector 110 may determine that the auxiliary equipment is abnormal. The abnormality detector 110 may detect, for example, an abnormality degree (an abnormality rank), a location where the abnormality has been detected, the number of abnormalities that have been detected, and the like. The abnormality detector 110 outputs detection results to the power generation controller 108.

### [Processing flow]

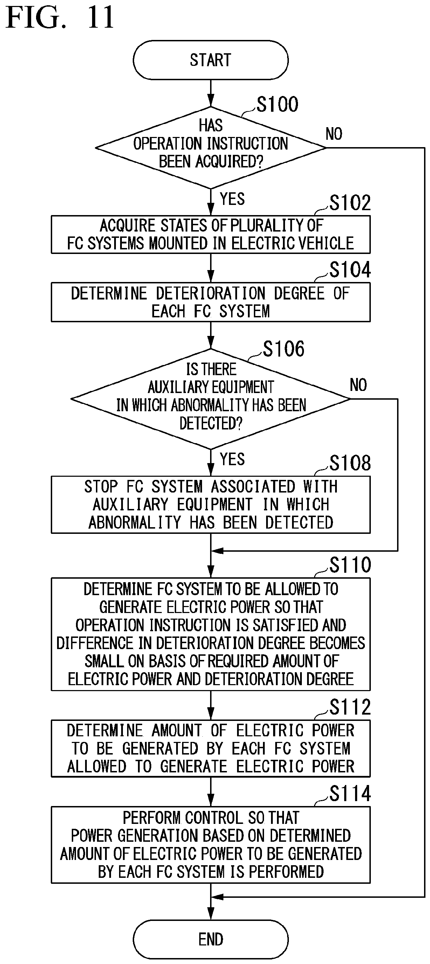

Hereinafter, a flow of a process executed by a computer of the power supply control system according to the embodiment will be described using a flowchart. In the following process, the process of power supply control by a plurality of FC systems mounted in the electric vehicle 10 will be mainly described. FIG. 11 is a flowchart showing an example of a flow of a process executed by the computer of the power supply control system according to the embodiment. The process of FIG. 11 is iteratively executed, for example, at a predetermined timing or at a predetermined interval while the electric vehicle 10 is traveling.

In the example of FIG. 11, first, the operation instruction acquirer 102 determines whether or not an operation instruction from the control device 80 to the FC system 200 has been acquired (step S100). In the processing of step S100, for example, the operation instruction acquirer 102 may acquire a required amount of electric power to be supplied to the auxiliary equipment of the electric vehicle 10. When it is determined that the operation instruction has been acquired, the state acquirer 104 acquires states of the plurality of FC systems mounted in the electric vehicle 10 (step S102). In the processing of step S102, the state acquirer 104 may store acquired state information as the state information 152 in the storage 150. The processing of step S102 may be iteratively executed at a predetermined timing or interval before step S100 is executed.

Subsequently, the deterioration degree determiner 106 determines a deterioration degree of each FC system on the basis of the state information of the plurality of FC systems (step S104). Subsequently, the power generation controller 108 determines whether or not there is auxiliary equipment in which the abnormality has been detected on the basis of detection results of the abnormality detector 110 (step S106). When it is determined that there is auxiliary equipment in which the abnormality has been detected, the power generation controller 108 causes the operation of the FC system associated with the auxiliary equipment in which the abnormality has been detected to be stopped with reference to the auxiliary equipment information 156 (step S108).

When it is determined that there is no auxiliary equipment in which an abnormality has been detected after the processing of step S108 or in the processing of step S106, the power generation controller 108 determines the FC system to be allowed to generate electric power so that an operation instruction is satisfied and a difference in the deterioration degree becomes small on the basis of required amounts of electric power and deterioration degrees in a plurality of FC systems other than the FC system whose operation has been stopped according to the processing of step S108 (step S110). Subsequently, the power generation controller 108 determines an amount of electric power to be generated by each FC system allowed to generate electric power that has been determined (step S112). Subsequently, the power generation controller 108 controls each FC system so that power generation based on the determined amount of electric power to be generated by each FC system is performed (step S114). Thereby, the process of the present flowchart ends. When it is determined that no operation instruction has been acquired in the processing of step S100, the process of the present flowchart ends.

When all the FC systems mounted in the electric vehicle 10 are associated with the auxiliary equipment in which the abnormality has been detected in the above-described processing of step S108, the power generation controller 108 may cause all the FC systems to be stopped, output information indicating that an abnormality has occurred to the control device 80 or cause the display 52 to display the information without performing the processing from step S110, and end the process shown in FIG. 11.

In the above-described processing of step S110, the power generation controller 108 may determine the FC system to be allowed to generate electric power so that at least one of differences in other states (for example, a total power generation time period, the number of activations, and the number of stops) becomes small instead of (or in addition to) the difference in the deterioration degree of each of the plurality of FC systems.

According to the above-described embodiment, a power supply control system includes the plurality of FC systems 200 mounted in the electric vehicle 10 (an example of an electric device) that operates using electric power; the supervisory ECU 100 (an example of a first controller) configured to control the plurality of FC systems in an integrated way; and the FC control device 246 (an example of a second controller) configured to control the FC system to which the FC control device 246 belongs among the plurality of FC systems, wherein the FC control device 246 acquires a state of the FC system to which the FC control device 246 belongs and notifies the supervisory ECU 100 of the state of the FC system, and wherein the supervisory ECU 100 controls power generation of each of the plurality of FC systems on the basis of the state of the FC system to which the FC control device 246 belongs acquired by the FC control device 246, whereby the plurality of FC systems can be more appropriately combined to supply electric power.

For example, in the sale of power supply control systems (for example, field sales) and the like, the requirements for system output, energy storage, and an amount of fuel to be retained vary with the application or each model, so that there is a high possibility that a large number of combinations of FC systems according to the requirements will be present. Therefore, the present embodiment includes the supervisory ECU 100 that manages the power generation of each of the plurality of FC systems in an integrated way. The supervisory ECU 100 includes a communication interface that receives an operation instruction from a higher-order device and a plurality of communication interfaces according to the total number of combinations of a plurality of FC systems 200, so that it is possible to minimize a change in a base system with respect to various requirements and it is possible to flexibly cope with a change in the system.

According to the embodiment, even if the number of combinations of FC systems increases or decreases, it is possible to cope with a change in software for the supervisory ECU 100, so that the influence of a change in software can be minimized. According to the embodiment, a software development volume can be limited and the influence on an external unit is also reduced.

According to the embodiment, for example, when a plurality of FC systems mounted in an electric device are combined to generate electric power, the availability of an operation of each system or an amount of electric power to be generated is controlled on the basis of the system efficiency and the deterioration state of each system in accordance with a load (required electric power) required for the electric device. According to the embodiment, power generation is controlled so that the difference in the state of each FC system becomes small. Thereby, power supply control with optimum efficiency can be performed for the combined system as a whole and the system efficiency (the power generation efficiency, the power supply efficiency, or the like) of the FC system can be further improved. Therefore, the lifespan of the entire system can be extended.

According to the embodiment, when an abnormality has been detected in some of the plurality of pieces of auxiliary equipment provided in the electric device, the operation of the FC system associated with the auxiliary equipment in which the abnormality has been detected is stopped and the operations of the remaining FC systems are continued, so that it is possible to limit the stopping of all the systems as far as possible and continue the operation of the main auxiliary equipment.

### [Modified examples]

Although the power supply control system controls an amount of electric power to be generated by each FC system or the like from a deterioration degree or the like on the basis of at least one of the total power generation time period for each FC system 200, the power generation time period for each power generation state, the number of activations, and the number of stops in the above-described embodiment, the power supply control system may perform control on each component within the FC system 200 instead of (or in addition to) the above control. For example, the FC system 200 includes each component shown in FIG. 2 (for example, the FC stack 210, the compressor 214, the hydrogen tank 226, the gas-liquid separator 232, the contactor 242, the FCVCU 244, the FC cooling system 280, or the like), a battery (not shown), and the like. The FC control device 246 acquires the state of each component continuously or according to an instruction from the supervisory ECU 100 and notifies the supervisory ECU 100 of acquired information. The supervisory ECU 100 stores information acquired from the FC control device 246 as the state information 152 in the storage 150. In this case, the state information 152 stores the state of each component for each FC system. The supervisory ECU 100 determines the deterioration degree for each component from the state information 152 and the like and controls the operation of each component or controls an operation of the FC system 200 including the component on the basis of a determination result.

According to the above-described modified example, control can be performed for each component and the state of the FC system 200 can be managed in more detail. Therefore, a plurality of FC systems can be more appropriately combined to supply electric power.

The above-described embodiment can be represented as follows.

A power supply control system including:
a storage device storing a program; and
a hardware processor,
wherein the hardware processor executes the program stored in the storage device to:
   execute first control for controlling a plurality of fuel cell systems mounted in an electric device that operates using electric power in an integrated way; and
   execute second control for controlling the fuel cell system to which the second control belongs among the plurality of fuel cell systems,
   wherein the second control includes acquiring a state of the fuel cell system to which the second control belongs, and
   wherein the first control includes controlling power generation of each of the plurality of fuel cell systems on the basis of the state of the fuel cell system to which the second control belongs acquired by the second control.

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

## Claims

1. A power supply control system comprising:
a plurality of fuel cell systems mounted in an electric device that operates using electric power;
a first controller configured to control the plurality of fuel cell systems in an integrated way; and
a second controller configured to control the fuel cell system to which the second controller belongs among the plurality of fuel cell systems,
wherein the second controller acquires a state of the fuel cell system to which the second controller belongs and notifies the first controller of the state of the fuel cell system, and
wherein the first controller controls power generation of each of the plurality of fuel cell systems on the basis of the state of the fuel cell system to which the second controller belongs acquired by the second controller.

2. The power supply control system according to claim 1, wherein the first controller controls the plurality of fuel cell systems so that a difference in a state of each of the plurality of fuel cell systems becomes small.

3. The power supply control system according to claim 1, wherein the first controller determines at least one of the number of fuel cell systems to be allowed to generate the electric power and an amount of electric power to be generated by each fuel cell system so that a required amount of electric power is satisfied on the basis of the required amount of electric power from the electric device and one or both of a deterioration degree and power generation efficiency of each of the plurality of fuel cell systems acquired by the second controller.

4. The power supply control system according to claim 3, wherein the first controller acquires a deterioration degree in each of the plurality of fuel cell systems on the basis of at least one of a total power generation time period of each of the plurality of fuel cell systems, a power generation time period for each power generation state, the number of activations, and the number of stops.

5. The power supply control system according to claim 4, wherein the first controller causes one or more fuel cell systems among the plurality of fuel cell systems to generate the electric power so that a difference in at least one of deterioration degrees, total power generation time periods, the number of activations, or the number of stops of the plurality of fuel cell systems becomes small on the basis of the required amount of electric power from the electric device.

6. The power supply control system according to claim 3, wherein the first controller causes the fuel cell system having a lower deterioration degree or the fuel cell system having slower progress of deterioration based on the deterioration degree among the plurality of fuel cell systems to generate the electric power preferentially.

7. The power supply control system according to claim 1,
wherein the electric device includes a plurality of pieces of auxiliary equipment, and
wherein, when an abnormality has been detected in at least some of the plurality of pieces of auxiliary equipment, the first controller causes power generation of the fuel cell system associated with the auxiliary equipment in which the abnormality has been detected among the plurality of fuel cell systems to be stopped.

8. The power supply control system according to claim 7, wherein, when associations between the auxiliary equipment and the fuel cell systems are classified into a plurality of layers or groups in accordance with the number of fuel cell systems affected by the abnormality in the auxiliary equipment, the first controller acquires a plurality of fuel cell systems other than the fuel cell system that is stopped due to the detection of the abnormality in the auxiliary equipment on the basis of the layer or the group, and determines the fuel cell system to be allowed to generate the electric power preferentially on the basis of one or both of a deterioration degree and power generation efficiency of each of the plurality of fuel cell systems that have been acquired.

9. The power supply control system according to any one of claims 1 to 8, wherein the electric device is a mobile object.

10. A power supply control method comprising:
executing, by a computer, first control for controlling a plurality of fuel cell systems mounted in an electric device that operates using electric power in an integrated way; and
executing, by the computer, second control for controlling the fuel cell system to which the second control belongs among the plurality of fuel cell systems,
wherein the second control includes acquiring a state of the fuel cell system to which the second control belongs, and
wherein the first control includes controlling power generation of each of the plurality of fuel cell systems on the basis of the state of the fuel cell system to which the second control belongs acquired by the second control.

11. A program causing a computer to:
execute first control for controlling a plurality of fuel cell systems mounted in an electric device that operates using electric power in an integrated way; and
execute second control for controlling the fuel cell system to which the second control belongs among the plurality of fuel cell systems,
wherein the second control includes acquiring a state of the fuel cell system to which the second control belongs, and
wherein the first control includes controlling power generation of each of the plurality of fuel cell systems on the basis of the state of the fuel cell system to which the second control belongs acquired by the second control.
